(19) Europäisches Patentamt
European Patent Office
Office européen des brevets

(11) Veröffentlichungsnummer: **0 275 011 B1**

# (12) EUROPÄISCHE PATENTSCHRIFT

(45) Veröffentlichungstag der Patentschrift: **02.12.92**

(51) Int. Cl.$^5$: **C08F 279/02**, C09D 109/00, C08L 51/04

(21) Anmeldenummer: **88100031.9**

(22) Anmeldetag: **05.01.88**

## (54) Wasserverdünnbare, lufttrocknende Pfropfcopolymerisate.

(30) Priorität: **16.01.87 DE 3701067**

(43) Veröffentlichungstag der Anmeldung:
**20.07.88 Patentblatt 88/29**

(45) Bekanntmachung des Hinweises auf die Patenterteilung:
**02.12.92 Patentblatt 92/49**

(84) Benannte Vertragsstaaten:
**AT DE ES FR GB IT NL**

(56) Entgegenhaltungen:
**EP-A- 0 172 589**
**EP-A- 0 238 108**
**FR-A- 2 424 308**
**GB-A- 788 651**

(73) Patentinhaber: **BAYER AG**

**W-5090 Leverkusen 1 Bayerwerk(DE)**

(72) Erfinder: **Blum, Harald, Dr.**
**Auf dem Westkamp 1**
**W-4175 Wachtendonk 1(DE)**
Erfinder: **Fleiter, Lothar, Dr.**
**Bärenstrasse 7**
**W-4150 Krefeld(DE)**
Erfinder: **Höhlein, Peter, Dr.**
**Windmühlenweg 3e**
**W-4152 Kempen 3(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft lufttrocknende Bindemittel, die durch Pfropfung ethylenisch ungesättigter Monomermischungen auf niedermolekulare Butadien(co)polymerisate erhalten werden. Durch Neutralisation der vorhandenen Carboxlgruppen werden die Pfropfcopolymerisate in die wasserlösliche Form überführt.

Lufttrocknende, wasserlösliche Bindemittel sind bekannt. Sie werden in wasserhaltigen Lacken eingesetzt. Auf Alkydharzbasis hergestellte, wasserlösliche Bindemittel unterliegen wegen des Gehalts an natürlichen, ungesättigten Fettsäuren, starken, vom Rohstoffeinsatz abhängigen Preisschwankungen. Zudem haben sie eine unbefriedigende Lagerstabilität in wäßriger, neutralisierter Lössung bzw. Dispersion.

Da diese Bindemittel wenige ungesättigte chemische Bindungen besitzen, weisen sie eine realtiv langsam ablaufende oxidative Vernetzung auf, was zu langen An- bzw. Durchtrocknungszeiten führen kann. Rein physikalisch trocknende Polykondensate oder Polymerisate zeichnen sich durch eine rasche Trocknung aus. Die damit hergestellten Überzüge zeigen kein optimales Eigenschaftbild, da bei der Trocknung keine zusätzliche Vernetzung erfolgen kann.

Um diese Systeme widerstandsfähiger gegen Außeneinflüsse zu machen, wurde die bei Raumtemperatur trocknenden Polyacrylate mit oxidativ vernetzbaren Komponenten modifiziert, z.B. durch Umsetzung von Glycidylcopolymerisaten mit trocknenden Fettsäure (z.B. GB-PS 7 937 776 und 1 227 398) oder durch Veresterung von OH-funktionellen Copolymerisaten mit trocknenden Fettsäuren (z.B. DE-OS 2 728 568).

Aufgrund ihres Preises und einiger lacktechnischer Nachteile, z.B. langsame Trocknung und Probleme beim Überarbeiten, hervorgerufen durch eine ausgeprägte Neigung zum Hochziehen des überlackierten Films, konnten sich diese Bindemittel nicht durchsetzen.

Die durch Pfropfen auf Polybutadien-Maleinsäureanhydrid Addukte hergestellten Bindemittelemulsionen zeigen (z.B. DE-AS 2 733 274) eine geringe Stabilität und führen zu Überzügen mit schlechten Eigenschaften, z.B. geringe Wasserfestigkeit und Korrosionsbeständigkeit. Deshalb wird in der DE-AS 2 733 274 ein Verfahren zur Herstellun von Polymeremulsionen vorgestellt, in dem ein maleinisiertes Polybutadien mittels einer Verbindung mit einer copolymerisierbaren Gruppe und einer Hydroxy-, Epoxy- oder Aminogruppe partiell verestert, imidiert oder amidiert wird und nach Neutralisation der verbleibenden Carboxylgruppen in Wasser mit einem Vinylmonomeren gepfropft wird. Dabei treten häufig Vernetzungsreaktionen auf, die zu unerwünschtem Viskositätsanstieg oder zum Gelieren der Ansätze führen können. Außerdem wird die eigentliche Pfropfreaktion in wäßriger Emulsion durchgeführt und deshalb sind die erhaltenen Produkte mit den für Emulsionspolymerisaten typischen Mängeln, wie z.B. geringer Wasserfestigkeit, Verträglichkeitsprobleme mit anderen Polymeren und schlechter Glanzgebung behaftet.

Acrylatmonomere gepfropft auf aliphatische, konjugierte Diolefinpolymere mit einem hohen 1,2-Vinylanteil sind aus der DE-OS 2 913 751 bekannt. Wasserverdünnbare bzw. bei Raumtemperatur trocknende Pfropfcopolymerisate werden nicht erwähnt.

Aufgabe der Erfindung war die Bereitstellung eines Bindemittels, welches eine rasche physkalische Trocknung des Überzugs garantiert, das zusätzlich oxidativ vernetzt werden kann und in wäßriger Anwendungsform eine gute Lagerstabilität zeigt, gute Glanzgebung im Überzug hat und im fertigen Lack nur etwa 5 Gew.% organisches Lösungsmittel enthält.

Die Aufgabe konnte dadurch gelöst werden, daß eine Mischung ethylenisch ungesättigter, radikalisch polymerisierbarer Verbindungen auf ein niedermolekulares, überwiegend 1,4- verknüpftes Butadienpolymerisat gepfropft wird

Dies war nicht zu erwarten, da aus der DE-AS 2 733 274 bekannt ist, daß maleinisierte Produkte des Polybutandiens mit vielen 1,4-Doppelbindungen im Molekülinneren aufweisen, die für eine Pfropfreaktion kaum zugänglich sind.

Gegenstand der Erfindung ist ein wasserverdünnbares, lufttrocknendes Polybutadienbindemittel aus einem Pfropfprodukt aus

I) 5 - 35 Gew.-Teilen Butadienpolymerisat,

II) 4 - 15 Gew.- Teilen $\alpha,\beta$-ethylenisch ungesättigten Monocarbonsäuren,

III) 25 - 60 Gew.- Teilen hartmachenden Monomeren, ausgewählt aus der Gruppe bestehend aus Styrol, Methylstyrol, Vinyltoluol, Methacrylsäuremethylester, Methacrylsäureethylester, Methacrylsäurebutylester und deren Mischungen,

IV) 20 - 45 Gew.- Teilen weichmachenden Monomeren, ausgewählt aus der Gruppe bestehend aus Ethylacrylat, Burylacrylat, 2-Ethylhexylacrylat, Octylacrylat, Dodecylacrylat, 2-Ethylhexylmethacrylat, Ocrylmethacrylat und deren Mischungen,

V) 0 - 50 Gew.- Teilen anderen copolymerisierbaren Verbindungen,

wobei die Komponenten I)- V) so zu wählen sind, daß ihre Summe 100 beträgt, und wobei die Wasserverdünnbarkeit durch eine mindestens teilweise Neutralisation der einpolymerisierten Carboxylgruppen gewahrleistet ist.

Gegenstand der Erfindung ist auch ein Verfahren zur Herstellung eines derartigen Bindemittels, welches dadurch gekennzeichnet ist, daß eine radikalisch initiierte Pfropfpolymerisation in einem organischen Lösungsmittel durchgeführt wird, anschließend das Lösungsmittel soweit entfernt wird, daß ein mit dem Bindemittel hergestellter Lack nur 5% organische Lösungsmittel enthält, und die einpolymerisierten Carboxylgruppen zumindest teilweise neutralisiert werden.

Die EP-A-0 172 589 befaßt sich zwar ebenfalls mit Pfropfcopolymerisaten auf Basis von Polybutadien, jedoch ausschließlich in in organischen Flüssigkeiten dispergierter Form. Die Herstellung von Pfropfcopolymerisaten mit bestimmten Mengen an einpolymerisierten hart- und weichmachenden Monomeren wird ebensowenig angesprochen wie die Herstellung von wasserverdünnbaren Produkten.

Die nicht vorveröffentlichte EP-A-0 238 108 befaßt sich mit andersartigen Dispersionen, die bestimmte Stabilisatoren enthalten und steht der vorliegenden Anmeldung nicht neuheitsschädlich entgegen.

Die erfindungsgemäßen Pfropfprodukte werden in einem Einstufenverfahren durch eine radikalisch initiierte Pfropfcopolymerisation in einem Lösungsmittel ohne Zusatz von Gelierungsinhibitoren hergestellt. Durch Abdestillieren von überschüssigem Lösungsmittel oder durch eine Polymerisation in wenig Lösungsmittel kann im Bindemittel der Gehalt an Lösungsmittel <5 Gew.-% gehalten werden. Wasserverdünnbar werden die Produkte durch teilweise oder vollständige Neutralisation der einpolymerisierten Carboxylgruppen. Die Zahl an ungesättigten chemischen Bindungen kann dabei so gewählt werden, das es bei Kontakt mit Luftsauerstoff zu einer guten oxidativen Vernetzung (Trocknung) kommt, ohne daß damit ein rascher Oberflächenabschluß und eine damit verbundene mangelhafte Durchtrocknung auftritt.

In ihrer wäßrige Anwendungsform zeichnen sich die erfindungsgemäßen Bindemittel durch Verseifungsstabilität und Lagerstabilität aus.

Die erfindungsgemäßen Bindemittel bestehen aus:

I) 5 - 35 Gew.- Teilen Butadienpolymerisat,
II) 4 - 15 Gew.- Teilen $\alpha,\beta$-ethylenisch ungesättigten Monocarbonsäure,
III) 25 - 60 Gew.- Teilen hartmachenden Monomeren
IV) 20 - 45 Gew.- Teilen weichmachenden Monomeren und
V) 0 - 50 Gew.- Teilen anderen copolymerisierbaren Verbindungen.

Die Komponenten I) - V) sind so zu wählen, daß ihre Summe 100 ergibt.

Bevorzugte Polybutadiene I besitzen als Zahlenmittel bestimmte Molekulargewichte von 500-5000 und Viskositäten von 200-50 000 mPa.s (bei 20 °C), eine Jodzahl nach Wijs von 380-470 g Jod/100 g Substanz, eine Dichte von 0,800 bis 0,950 g/ml (bei 20 °C) und weisen überwiegend 1,4-cis bzw. 1,4-trans-Verknüpfung auf. Ihre Herstellung ist bekannt (z.B. DE-AS 1 186 631, US-PS 3 789 040). Es können auch Mischungen dieser Polybutadiene mit anderen Polybutadienen verwendet werden, wobei auch Butadiencopolymerisate mit bis zu 30 Gew.-% anderen Comonomeren, z.B. Styrol, Methylstyrol, Dimethylstyrol, Ethylstyrol, Diethylstyrol, Isopropylstyrol, Butylstyrol, Methoxystyrol, $\alpha$-Methylstyrol, Chlorstyrol, Bromstyrol, Hydroxystyrol, Aminostyrol, Acrylsäure, Acrylsäurealkylester, Methacrylsäure, Methacrylsäurealkylester, Acrylnitril, Methacrylnitril, Vinylacetat, Alkylchlorid, Vinylchlorid, Diethylmaleinat, Pentadien-1,3 Dimethylbutadien-1,3, Isopren usw. eingesetzt werden können.

Bevorzugte $\alpha,\beta$-ethylenisch ungesättigte Monocarbonsäuren II sind beispielsweise Acrylsäure, Methacrylsäure, Vinylessigsäure, $\alpha$-Ethylacrylsäure, Crotonsäure, Itaconsäure, Maleinsäure, Fumarsäure und deren Mischungen.

Geeignete hart- bzw. weichmachende Monomere sind die bereits genannten Verbindungen bzw. deren Mischungen.

Andere copolymerisierbare Verbindungen V sind beispielsweise (Methyl)-acrylamid, N-Methoxymethylmethacrylamid, siliciumhaltige Monomere, z.B. Vinyltriethoxysilan, Vinyl trimethoxysilan, Vinyl-tris ($\beta$-methoxyethoxy)silan, $\gamma$-Methacryloxypropyltrimethoxysilan, $\gamma$-Methacryloxypropyltris (2-methoxyethoxy)silan, Vinyltriacetoxysilan; Hydroxyethylacrylat, Hydroxyethylmethacrylat, Hydroxypropylacrylat, Hydroxypropylmethacrylat, Glycidyl(meth)acrylat, urethangruppenhaltige Monomere der Formel (A)

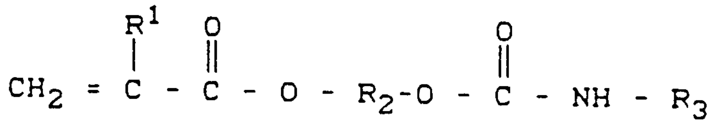

(A),

in welcher

$R_1$ für Wasserstoff und $C_1$-$C_4$, Alkyl, bevorzugt Methyl,

$R_2$ für lineares oder verzweigtes aliphatisches $C_2$-$C_{15}$-Alkylen und

$R_3$ für aromatische $C_6$-$C_{12}$-Reste, aliphatische $C_1$-$C_{18}$-Reste, cycloaliphatische $C_5$-$C_{10}$-Reste und araliphatische $C_7$-$C_{16}$-Reste steht.

Beispiele für Monomere der Formel (A) sind die Umsetzungsprodukte von Hydroxyalkyl(meth)acrylaten wie 2-Hydroxyethyl(meth)acrylat, 2-Hydroxypropyl(meth)acrylat und Hydroxybutyl(meth)acrylat mit Monoisocyanaten wie Phenylisocyanat, Isopropylisocyanat, Cyclohexylisocyanat, Tolylisocyanat, Benzylisocyanat, Naphthylisocyanat.

Die Pfropfcopolymerisation wird in der Regel so durchgeführt, daß das Polybutadien als Pfropfgrundlage im Reaktionsgefäß vorgelegt wird und die aufzupfropfende Monomeren über einen gewissen Zeitraum zudosiert werden.

Die Pfropfreaktion kann in Masse, bevorzugt in üblichen organischen Lösungsmitteln durchgeführt werden.

Vorzugsweise werden übliche Radikalbildner, die für Reaktionstemperatur von 60-160 °C geeignet, sind, eingesetzt. Gegebenenfalls können Molekulargewichtsregler zugesetzt werden.

Bevorzugte Radikalbildner sind organische Peroxide, wie z.B. Dibenzoylperoxid, Cumolhydroperoxid, Di-tert.-butylperoxid, Dilaurylperoxid, tert.-Butylper-2-ethylhexanot, tert.-Butylpermaleinat, tert.-Butylperbenzoat, Dicumylperoxid, Didecanoylperoxid oder Azoverbindungen wie Azodiisobuttersäurenitril, Azodicyclohexylcarbonitril.

Als übliche Molekulargewichtsregler eignen sich n-Dodecylmerkaptan, tert.-Dodecylmerkaptan, 2-Merkaptoethanol, 3-Merkaptopropionsäure.

Geeignete, übliche organische Lösungsmittel sind z.B. Ester wie Butylacetat, Ethylglykolacetat, Glykole wie Butylglykol, Methyldiglykol, Lactame wie N-Methylpyrrolidon, Alkohole wie Butanol, Pentanol, Hexanol, Ketone wie Methylisobutylketon, Aromaten wie Xylol, Ether wie Methoxypropanol, Methoxypropylglykolacetat.

Die Pfropfcopolymerisation kann nach einem Monomerumsatz von 96, bevorzugt von 99 % beendet werden.

Der Monomerumsatz kann durch eine Bestimmung des Festgehalts der Reaktionsmichung bestimmt werden und durch eine gaschromatographische Restmonomerenanalyse überprüft werden. Bei der Pfropfpolymerisation werden 10 bis 25 % der Doppelbindungen des Polybutadiens verbraucht, was durch übliche Methoden bestimmt werden kann. Zur Reduzierung des Anteils organischer Lösungsmittel kann aus der Harzlösung, z.B. durch Destillation, Lösungsmittel entfernt werden. Diese wird vorzugsweise im Vakuum (0,01 bis 0,1 bar) durchgeführt. Weiterhin kann auch bei Normaldruck unter verstärktem Einleiten eines Intergases wie Stickstoff oder Argon destilliert werden.

Neden dem überschüssigen Lösungsmittel können so auch eventuell noch vorhandene Restmonomere aus dem Pfropfcopolymerisat entfernt werden.

Der Lösungsmittelgehalt liegt dann je nach Destillationsgrad bei 0 bis 20 Gew.-%. Um das Harz in eine wasserverdünnbare Form überführen, wird dann eine mindestens teilweise Neutralisation der einpolymerisierten Carboxylgruppen vorgenommen.

Zur Neutralisation können wäßrige, anorganische Basen, wie z.B. Natriumhydroxid, Kaliumhydroxid oder Ammoniak verwendet werden. Vorzugsweise werden organische Amine eingesetzt, wie z.B. Ethylamin, Propylamin, Dimethylamin, Diethylamin, Dipropylamin, Trimethylamin, Ethanolamin, Diethanolamin, Dibutanolamin, Methyldiethanolamin, Dimethylethanolamin, Diethylethanolamin.

Die Neutralisation kann auf folgenden Wegen durchgeführt werden: Ein Wasser/Neutralisationsgemisch wird auf 40-80 °C erwärmt und die heiße Harzschmelze darin eingerührt. Das Neutralisationsmittel kann, gegebenenfalls mit Wasser verdünnt, auch direkt zur Harzlösung gegeben werden und die neutralisierte Harzlösung dann durch Zugabe von Wasser auf den gewünschten Festkörpergehalt eingestellt werden.

Der bevorzugte Neutralisationsgrad der Säure-Gruppen liegt bei 0,25 bis 0,75 Äquivalenten Neutralisationsmittel.

Das in seiner wäßrigen Form vorliegende Harz enthält von 0 bis 10 Gew.- % organische Lösungsmittel. Es kann direkt ohne weitere Zusätze als Lack für die Herstellung von klaren Überzügen eingesetzt werden.

In der Regel werden noch übliche Pigmente und übliche Zusatzstoffe mit z.B. Antioxidantien, Trocknungsbeschleuniger, Hautverhinderungsmittel, Antischaummittel, Netzmittel zugegeben.

Pigmente, Zusatzstoffe und Pfropfcopolymerisat werden zusammen in wohlbekannter Weise zu fertigen Lacken angerieben. Als Mahlaggregate können z.B. Sandmühlen, Kugelmühlen oder Dreiwalzen verwendet werden.

Bevorzugte Trocknungsbeschleuniger sind Salze organischer Carbonsäuren von Metallen wie Cobalt, Mangan, Nickel, Chrom, Zink, Eisen, Zirkonium, Aluminium und Calcium. Diese können sowohl bei der Anreibung zugesetzt, oder nachträglich in den fertigen Lack eingerührt werden. Die Pfropfcopolymerisate

können in oder als wäßrige, lufttrocknende Beschichtungsmittel für Kunststoffe, Metalle, Glas, Holz, Papier, Pappe und Keramik verwendet werden, darüber hinaus in Druckfarben für Textilien und Leder und als Bindemittel in Imprägnier-oder Verfestigungsmitteln für Papier, Textilien und Leder. Die Überzugsmittel können nach herkömmlichen Techniken, z.B. Flut-, Tauch-, Spritz-, Streich-, Gieß-und Walzenauftrag aufgebracht werden.

Beispiele

In den nachstehenden Beispielen sind Angaben über Teile und Prozente Gewichtsangaben und beziehen sich auf die nicht flüchtigen Feststoffe, falls nicht ausdrücklich etwas anderes festgestellt wird.

Allgemeine Herstellvorschrift:

(Die jeweils eingesetzten Mengen können der Tabelle 1 entnommen werden)
In einen 4 l-Rundkolben mit Rührer, Kühl- und Heizvorrichtung wird Teil (I) (siehe Tabelle 1) vorgelegt und auf Reatkionstemperatur aufgeheizt. Die Monomerenmischung (Teil II) wird in 4 Stunden, die Initiatorlösung (Teil III) in 5 1/2 Stunden zudosiert. Anschließlich wird noch 2 Stunden nachgerührt. Die Ansätze werden destillativ von einem Teil des Lösungsmittels befreit, mit Cobaltoktoat (0,06 % Cobaltmetall auf Bindemittel fest) als Trocknungsbeschleuniger versetzt und dann in einem wäßrigen Neutralisationsmittelgemisch aus 5 Teilen Ammoniak und 1 Teil Triethylamin gelöst. Die Neutralisationsmittelmenge wird so gewählt, daß die Bindemitteldispersion einen pH-Wert von 7,5-9,0 hat. Anschließend wird als Hautverhinderungsmittel Ascinin R conz (BAYER AG) zugesetzt, und zwar 1,5 % bezogen auf den Feststoffgehalt des Bindemittels.

Folgende Polybutadiene wurden verwendet:

- Polyöl 110 (Chemische Werke Hüls AG):
  Molekulargewicht: 1800 ± 15 %,
  Viskosität (20 °C): 750 ± 100 % mPa.s,
  Jodzahl (Wijs): 450 ± 5 % g/100 g,
  1,3-Butadien Homopolymerisat mit folgendem chemischem Strukturaufbau:
  ~ 99 % 1,4 cis/1,4 trans-Doppelbindungen
  ~ 1 % 1,2-Vinyldoppelbindungen
- Lithene PL (Chemetall):
  Molekulargewicht: ca. 900,
  Viskosität (Brookfield) (25 °C): 0,3 Pas,
  Jodzahl (berechnet): ca. 420 g/100 g,
  1,3-Butadien Homopolymerisat mit folgendem chemischen Strukturaufbau:
  ~ 55 % 1,4 cis/1,4-trans-Doppelbindungen
  ~ 45 % 1,2-Vinyldoppelbindungen

**Tabelle 1** (Bindemittelzusammensetzung in g)

| | | 1 | 2 | 3 | 4 | 5 | 6 | 7 |
|---|---|---|---|---|---|---|---|---|
| Teil 1: | Polyöl 110 (CWH) | 300 | 225 | 150 | 150 | 75 | 270 | 200 |
| | Lithene PL (Chemetall) | | | | 150 | 150 | | |
| | Methoxypropylacetat | 204 | 204 | 204 | 202 | 202 | 204 | |
| | Pentanol | 227 | 227 | 227 | 230 | 230 | 227 | 124 |
| | Butylglykol | 395 | 395 | 395 | 392 | 392 | 394 | 263 |
| Teil 2: | Butylacrylat | 495 | 495 | 525 | 495 | 495 | 510 | 330 |
| | Methylmethacrylat | 555 | 615 | 720 | 600 | 675 | 615 | 350 |
| | Methacrylsäure (90 %) | 117 | 117 | 117 | 117 | 117 | 117 | 78 |
| | Ethylacrylat | 15 | 45 | | | | | 10 |
| | Styrol | 30 | 15 | | | | | 40 |
| | n-Dodecylmerkaptan | 45 | 45 | 45 | 45 | 45 | 45 | 30 |
| | Merkaptoethanol | 4,5 | 4,5 | 4,5 | 6 | 6 | 4,5 | 3 |
| Teil 3: | t.-Butylper-2-ethylhexanoat | 28,5 | 28,5 | 28,5 | 15 | 15 | 28,5 | 17 |
| | Azodiisobuttersäurenitril | 10 | 10 | 10 | 10 | 10 | 10 | 2 |
| | Pentanol | 11 | 11 | 11 | 11 | 11 | 11 | 48,4 |
| | Butylglykol | 20 | 20 | 20 | 20 | 20 | 20 | |
| Reaktionstemperatur (°C) | | 122 | 122 | 123 | 123 | 123 | 123 | 123 |
| Säurezahl des 100 %igen Harzes (mg KOH/g Substanz) | | 47 | 47 | 46 | 47 | 46 | 46 | 49 |

**Tabelle 1 (Fortsetzung)**

| | | 8 | 9 | 10 | 11 | 12 |
|---|---|---|---|---|---|---|
| Teil 1: | Polyöl 110 (CWH) | 375 | 500 | 625 | 400 | 600 |
| | Pentanol | 1617 | 1617 | 1617 | 578 | 867 |
| | Xylol | | | | 289 | 434 |
| Teil 2: | Styrol | 375 | 375 | 375 | 700 | 1200 |
| | Methylmethacrylat | 500 | 500 | 500 | 156 | 233 |
| | Methacrylsäure (90 %) | 306 | 306 | 306 | | |
| | Ethylacrylat | 550 | 425 | 300 | | |
| | Vinyltriethoxysilan | 25 | 25 | 25 | | |
| | Hydroxyethylacrylat | 25 | 25 | 25 | | |
| | Butylacrylat | 375 | 375 | 375 | 460 | 990 |
| | Umsetzungsprodukt aus Hydroxyethylmethacrylat und Dodecylisocyanat | | | | 300 | |
| | n-Dodecylmerkaptan | 50 | 50 | 50 | 60 | 90 |
| Teil 3: | t.-Butylper-2-ethyl-hexanoat | 35 | 35 | 50 | 50 | 75 |
| | Pentanol | 85 | 85 | 64 | | |
| Reaktionstemperatur (°C) | | 117 | 117 | 117 | 120 | 123 |
| Säurezahl des 100 %igen Harzes (mg KOH/g Substanz) | | 72 | 71 | 74 | 45 | 43 |

Vergleichsbeispiel 13

Das Vergleichsbeispiel 13 wurde in Anlehnung an Beispiel 1 aus der DE-AS 2 733 274 hergestellt.

500 g Polyöl 110, 98 g Maleinsäureanhydrid, 2,5 g Kupfersoligen (10 %ige Lösung in Xylol mit 10 % Kupfergehalt) und 0,26 g Acetylaceton werden in einem mit Rühr-, Kühl- und Heizvorrichtung versehenen Rundkolben eingewogen und unter Stickstoffatmosphäre in 2 Stunden auf 190 °C aufgeheizt, 6 Stunden bei 190 °C gehalten und dann auf 90 °C abgekühlt. Nach Zugabe von 120 g Hydroxyethylmethacrylat, 300 g Toluol und 0,2 g Hydrochinon wird 6 Stunden bei 90 °C gerührt und anschließend das Toluol im Vakuum bis auf einen Festgehalt von 95 % abdestilliert. Die Harzschmelze wird in 2003 g Wasser und 56,1 g Kaliumhydroxid gelöst und die so hergestellte Harzdispersion bei 70 °C mit 150 g Styrol, 0,15 g Ammoniumpersulfat, 1,5 g Azodiisobuttersäurenitril und 1,5 g n-Dodecylmerkaptan versetzt und 4 Stunden bei 70 °C gehalten. Man erhält eine Harzdispersion mit einem Festgehalt von 26,6 %.

Vergleichsbeispiel 14

Das Vergleichsbeispiel 14 ist ein physikalisch trocknendes Acylatcopolymerisat, z.B. gemäß EP-OS 91 021.

In einem Rühr- Kühl- und Heizvorrichtung versehenen 5 l-Rundkolben werden 951 g Butylglykol vorgelegt, auf 126 °C erhitzt und dann in 4 Stunden 1200 g Butylacrylat, 1350 g Methylmethacrylat, 120 g Styrol, 120 g Ethylacrylat, 233 g Methacrylsäure (90 %ig), 90 g n-Dodecylmerkaptan und 15 g Merkaptoethanol und in 5 1/2 Stunden 57 g t.-Butylper-2-ethylhexanoat zugetropft. Nach 2 Stunden Nachrühren wird andestilliert und ein in einem Wasser/Ammoniak/Triethylamingemisch gelöst.

Herstellung von Weißlacken

Die Herstellung von titandioxidhaltigen Weißlacken erfolgt in der üblichen Weise. Die Bindemitteldispersion wird in einem Mischbehälter vorgelegt und die Pigmente und Zusatzstoffe unter schnellem Rühren zugegeben. Dieses vordispergierte Mahlgut wird anschließend auf einer Perlmühle angerieben. Der fertige Lack wird 24 Stunden nach dem Anreiben auf eine Spritzviskosität entsprechend einer Auslaufzeit von etwa 25-30 Sekunden, gemessen im DIN-4-mm-Becher, eingestellt.

Die Neutralisationsmittelmenge wird so gewählt, daß die fertigen Lacke pH-Werte von 7,9 bis 8,4 aufweisen.

Der Lösungsmittelgehalt aller fertigen Lacke liegt bei ca. 5 %. Die Lagerstabilität aller Bindemittel bzw. der daraus hergestellten Lacke beträgt mehr als 6 Monate. Verseifung wurde während der Lagerung nicht beobachtet.

Die Weißlacke wurden auf Glasplatten bzw. entfettetem Stahlblech aufgezogen. Ein Teil der Weißlacke wurde bei Raumtemperatur, d.h. etwa 20-22 °C getrocknet, ein Teil der Weißlacke wurde bei erhöhter Temperatur (forciert), d.h. 30 Minuten bei 80 °C getrocknet.

Die Zusammensetzung und Eigenschaften der bei Raumtemperatur getrockneten Lacke sind in Tabelle 2, die der forciert getrockneten Lacke in Tabelle 3 zusammengefaßt.

Die Pendelhärte wurde nach König (DIN 53 157), die Tiefung nach Erichsen (DIN 53 156) und der Glanz nach Gardner bei einem 20° Winkel bestimmt. Die Wasserfestigkeit wurde durch Einstellen der auf Platten getrockneten Überzüge in ein Wasserbad bei Raumtemperatur bestimmt. Angegeben ist jeweils der Zeitraum, in dem keine optisch sichtbare Veränderung auftrat. Die Abhängigkeit von Glanz und Weißgrad von höheren Temperaturen wurde während einer 48 Stunden dauernden 70 bis 80 °C Belastung gemessen.

**T a b e l l e 2** Weißlackzusammensetzung und Prüfergebnisse bei Raumtemperaturtrocknung

| | 1 | 2 | 3 | 4 | 5 | 6 | 7 | 13 | 14 |
|---|---|---|---|---|---|---|---|---|---|
| Festkörper der wäßrigen Dispersion (%) | 36,3 | 34,9 | 35,6 | 36,6 | 33,5 | 35,5 | 36,2 | 26,6 | 37,2 |
| Menge Dispersion (g) | 275,4 | 286,5 | 280,8 | 273,2 | 299,4 | 281,6 | 276,2 | 375,9 | 271,0 |
| Titandioxid (g) | 65,0 | 65,0 | 65,0 | 65,0 | 65,0 | 65,0 | 65,0 | 65,0 | 65,0 |
| Wasser (g) | 22,5 | 28,5 | 35,5 | 28,0 | 23,0 | 28,0 | 23,5 | 19,5 | 191,0 |
| Festkörper des Weißlackes (%) | 45,5 | 43,4 | 43,3 | 45,1 | 42,6 | 44,0 | 44,9 | 35,7 | 31,3 |
| pH-Wert | 8,0 | 7,9 | 8,0 | 7,9 | 8,2 | 8,0 | 8,1 | 8,1 | 8,0 |
| Klebfreitrocknung (min) | 120 | 120 | 90 | 90 | 120 | 120 | 150 | 60 | 240 |
| Glanz (20°) | 76 | 76 | 74 | 74 | 75 | 74 | 75 | 10 | 73 |
| Pendelhärte n. 16 Std. | 25" | 34" | 31" | 30" | 37" | 30" | 31" | 46" | 17" |
| n. 28 Tagen | 101" | 95" | 87" | 79" | 68" | 95" | 101" | 111" | 38" |
| Wasserfestigkeit n. 16 Std. (Std.) | >6 | >6 | >6 | >6 | >6 | >6 | >6 | 2 | 2 |
| Erichsentiefung n. 24 Std. (mm) | 9,0 | 9,0 | 9,0 | 9,0 | 9,0 | 9,0 | 9,0 | | 9,0 |
| n. 14 Tagen (mm) | 9,0 | 9,0 | 9,0 | 9,0 | 9,0 | 9,0 | 9,0 | | 9,0 |
| Überarbeitbarkeit | ----------- sehr gut ----------- | | | | | | | | |
| Weißgrad (Elrepho) n.16 Std. | 85,8 | 85,5 | 86,7 | 85,5 | 86,5 | 83,3 | 84,4 | | |
| n.48 Std./70° | 68,0 | 71,6 | 74,0 | 75,7 | 78,7 | 67,7 | 20,3 | | |
| Glanzhaltung n. 48 Std./70°C | 77 | 77 | 75 | 74 | 74 | 75 | 75 | | |

Tabelle 3 Weißlackzusammensetzung und Prüfergebnisse bei 80°C Trocknung 30 Minuten

| | 8 | 9 | 10 | 11 | 12 |
|---|---|---|---|---|---|
| Festkörper der wäßrigen Dispersion (%) | 42,2 | 42,8 | 42,5 | 36,5 | 36,2 |
| Menge Dispersion (g) | 237,0 | 233,6 | 235,3 | 274,0 | 276,2 |
| Titandioxid (g) | 65,0 | 65,0 | 65,0 | 65,0 | 65,0 |
| Wasser (g) | 39,4 | 35,6 | 25,9 | 7,2 | 8,6 |
| Festkörper des Weißlackes (%) | 46,1 | 47,4 | 48,4 | 46,0 | 45,9 |
| pH-Wert | 8,4 | 8,4 | 8,4 | 8,4 | 8,4 |
| Glanz (20°) | 65 | 70 | 68 | 75 | 70 |
| Wasserfestigkeit (Std.) | >8 | >8 | >8 | >24 | >24 |
| Pendelhärte | 57" | 56" | 39" | 28" | 29" |
| Überarbeitbarkeit | ---------- | ---------- | sehr gut | ---------- | ---------- |
| Erichsentiefung (mm) | 1,5 | 1,5 | 3,2 | 9,0 | 9,0 |
| Glanzhaltung nach 10 Tagen, 70°C | 78 | 78 | 77 | 78 | 75 |
| Weißgrad (Elrepho) | 85,0 | 85,1 | 85,6 | 84,0 | 85,3 |
| nach 32 Std., 80°C | 58,0 | 50,8 | 56,0 | 29,3 | 66,8 |

Die erfindungsgemäßen Bindemittel zeichnen sich durch eine rasche Trocknung, gute Glanzwerte, sehr gute Lager-und Verseifungsstabilität, gute Überarbeitbarkeit, hohen Weißgrad und einen geringen Lösungsmittelgehalt von ca. 5 Gew.-% aus.

Das Vergleichsbeispiel 13 fällt durch seinen niedrigen Glanzwert heraus, während Vergleichsbeispiel 14 nur geringe Pendelhärte und geringe Wasserfestigkeit aufweist.

**Patentansprüche**

**Patentansprüche für folgende Vertragsstaaten : AT, DE, FR, GB, IT, NL**

1. Wasserverdünnbares, lufttrocknendes Polybutadienbindemittel aus einem Pfropfprodukt aus
   I) 5 - 35 Gew.- Teilen Butadienpolymerisat,
   II) 4 - 15 Gew.- Teilen α,β-ethylenisch ungesättigten Monocarbonsäuren,
   III) 25 - 60 Gew.- Teilen hartmachenden Monomeren, ausgewählt aus der Gruppe bestehend aus Styrol, Methylstyrol, Vinyltoluol, Methacrylsäuremethylester, Methacrylsäureethylester, Methacrylsäurebutylester und deren Mischungen,
   IV) 20 - 45 Gew.- Teilen weichmachenden Monomeren, ausgewählt aus der Gruppe bestehend aus Ethylacrylat, Butylacrylat, 2-Ethylhexylacrylat, Octylacrylat, Dodecylacrylat, 2-Ethylhexylmethacrylat, Octylmethacrylat und deren Mischungen,
   V) 0 - 50 Gew.- Teilen anderen copolymerisierbaren Verbindungen,
   wobei die Komponenten I) - V) so zu wählen sind, daß ihre Summe 100 beträgt, und wobei die Wasserverdünnbarkeit durch eine mindestens teilweise Neutralisation der einpolymerisierten Carboxylgruppen gewährleistet ist.

2. Bindemittel nach Anspruch 1, dadurch gekennzeichnet, daß das Butadienpolymerisat (I) ein als Zahlenmittel bestimmtes Molekulargewicht von 500-5000 und eine Jodzahl nach Wijs von 380-470 g Jod/100 g Substanz hat, sowie überwiegend 1,4-Konfiguration aufweist.

3. Bindemittel nach Anspruch 1, dadurch gekennzeichnet, daß es als Monomere V) Umsetzungsprodukte von Hydroxyalkyl(meth)acrylaten mit Monoisocyanaten in einpolymerisierter Form enthält

4. Bindemittel nach Anspruch 1, dadurch gekennzeichnet, daß es als Monomere V) siliciumhaltige Monomere in einpolymerisierter Form enthält

5. Verfahren zur Herstellung von Bindemitteln nach Anspruch 1, dadurch gekennzeichnet, daß eine radikalisch initiierte Pfropfpolymerisation in einem organischen Lösungsmittel durchgeführt wird, anschließend das Lösungsmittel soweit entfernt wird, daß ein mit dem Bindemittel hergestellter Lack nur 5% organische Lösungsmittel enthält, und die einpolymerisienten Carboxylgruppen zumindest teilweise neutralisiert werden.

**Patentanspruch für folgenden Vertragsstaat : ES**

1. Verfahren zur Herstellung eines wasserverdünnbaren, lufttrocknenden Polybutadienbindemittels aus einem Pfropfprodukt, dadurch gekennzeichnet, daß in einem organischen Lösungsmittel eine radikalisch initiierte Pfropfpolymerisation unter Verwendung von
   I) 5 - 35 Gew.- Teilen Butadienpolmerisat,
   II) 4 - 15 Gew.- Teilen α,β-ethylenisch ungesättigten Monocarbonsäuren,
   III) 25 - 60 Gew.- Teilen hartmachenden Monomeren, ausgewählt aus der Gruppe bestehend aus Styrol, Methylstyrol, Vinyltoluol, Methacrylsäuremethylester, Methacrylsäureethylester, Methacrylsäurebutylester und deren Mischungen,
   IV) 20 - 45 Gew.- Teilen weichmachenden Monomeren, ausgewählt aus der Gruppe bestehend aus Ethylacrylat, Butylacrylat, 2-Ethylhexylacrylat, Octylacrylat, Dodecylacrylat, 2-Ethylhexymethacrylat, Octylmethacrylat und deren Mischungen und gegebenenfalls
   V) 0 - 50 Gew.- Teilen anderen copolymerisierbaren Verbindungen,
   durchgeführt wird, wobei die Komponenten I) - V) so zu wählen sind, daß ihre Summe 100 beträgt, anschließend das Lösungsmittel soweit entfernt wird, daß ein mit dem Bindemittel hergestellter Lack nur 5% organische Lösungsmittel enthält, und die einpolymerisierten Carboxylgruppen zumindest teilweise neutralisiert werden.

**Claims**
**Claims for the following Contracting States : AT, DE, FR, GB, IT, NL**

1. A water-dilutable air-drying polybutadiene binder of a graft product of
   I) 5 to 35 parts by weight butadiene polymer,
   II) 4 to 15 parts by weight α,β-ethylenically unsaturated monocarboxylic acids,
   III) 25 to 60 parts by weight hardening monomers selected from the group consisting of styrene,

methyl styrene, vinyl toluene, methyl methacrylate, butyl methacrylate and mixtures thereof,
IV) 20 to 45 parts by weight softening monomers selected from the group consisting of ethyl acrylate, butyl acrylate, 2-ethyl hexyl acrylate, octyl acrylate, dodecyl acrylate, 2-ethyl hexyl methacrylate, octyl methacrylate and mixtures thereof,
V) 0 to 50 parts by weight other copolymerizable compounds,
components I) to V) having to be selected so that they total 100 and dilutability in water being guaranteed by at least partial neutralization of the copolymerized carboxyl groups.

**2.** A binder as claimed in claim 1, characterized in that the butadiene polymer (I) has a number average molecular weight of 500 to 5,000 and a Wijs iodine value of 380 to 470 g iodine/100 g substance and, predominantly, the 1,4-configuration.

**3.** A binder as claimed in claim 1, characterized in that it contains as monomers V) reaction products of hydroxyalkyl (meth)acrylates with monoisocyanates in copolymerized form.

**4.** A binder as claimed in claim 1, characterized in that it contains silicon-containing monomers in copolymerized form as the monomers V).

**5.** A process for the production of the binder claimed in claim 1, characterized in that a radical-initiated graft polymerization is carried out in an organic solvent, the solvent is subsequently removed to such an extent that a lacquer produced with the binder contains only 5% organic solvents and the copolymerized carboxyl groups are at least partly neutralized.

**Claim for the following Contracting State : ES**

**1.** A process for the production of a water-dilutable air-drying polybutadiene binder of a graft product, characterized in that a radical-initiated graft polymerization is carried out in an organic solvent using
I) 5 to 35 parts by weight butadiene polymer,
II) 4 to 15 parts by weight $\alpha,\beta$-ethylenically unsaturated monocarboxylic acids,
III) 25 to 60 parts by weight hardening monomers selected from the group consisting of styrene, methyl styrene, vinyl toluene, methyl methacrylate, butyl methacrylate and mixtures thereof,
IV) 20 to 45 parts by weight softening monomers selected from the group consisting of ethyl acrylate, butyl acrylate, 2-ethyl hexyl acrylate, octyl acrylate, dodecyl acrylate, 2-ethyl hexyl methacrylate, octyl methacrylate and mixtures thereof,
V) 0 to 50 parts by weight other copolymerizable compounds,
components I) to V) having to be selected so that they total 100, the solvent is subsequently removed to such an extent that a lacquer produced with the binder contains only 5% organic solvents and the copolymerized carboxyl groups are at least partly neutralized.

**Revendications**
**Revendications pour les Etats contractants suivants : AT, DE, FR, GB, IT, NL**

**1.** Liant polybutadiénique séchant à l'air et pouvant être dilué par l'eau, à base d'un produit greffé de
I) 5 à 35 parties en poids de polymère de butadiène
II) 4 à 15 parties en poids d'acides monocarboxyliques à non-saturation $\alpha,\beta$-éthylénique.
III) 25 à 60 parties en poids de monomères durcissants, choisis dans le groupe comprenant le styrène, le méthylstyrène, le vinyltoluène, l'ester méthylique de l'acide méthacrylique, l'ester éthylique de l'acide méthacrylique, l'ester butylique de l'acide méthacrylique et leurs mélanges,
IV) 20 à 45 parties en poids de monomères plastifiants, choisis dans le groupe comprenant l'acrylate d'éthyle, l'acrylate de butyle, l'acrylate de 2-éthylhexyle, l'acrylate d'octyle, l'acrylate de dodécyle, le méthacrylate de 2-éthylhexyle, le méthacrylate d'octyle et leurs mélanges,
V) 0 à 50 parties en poids d'autres composés copolymérisables,
les composants I) à V) devant être choisis de manière que leur somme atteigne 100 et l'aptitude à la dilution par l'eau étant assurée par une neutralisation au moins partielle des groupes carboxyle incorporés par polymérisation.

**2.** Liant suivant la revendication 1, caractérisé en ce que le polymérisat de butadiène (I) a un poids moléculaire, déterminé d'après la moyenne numérique, de 500 à 5000 et un indice d'iode selon Wigs

de 380 à 470 g d'iode par 100 g de substance, de même qu'il présente principalement la configuration 1,4.

3. Liant suivant la revendication 1, caractérisé en ce qu'il contient comme monomères (V) des produits de réaction de (méth)acrylates d'hydroxyalkyle avec des monoisocyanates, sous la forme incorporée par polymérisation.

4. Liant suivant la revendication 1, caractérisé en ce qu'il contient comme monomères (V) des monomères contenant du silicium, sous la forme incorporée par polymérisation.

5. Procédé de production de liants suivant la revendication 1, caractérisé en ce qu'on conduit une polymérisation de greffage amorcée par des radicaux dans un solvant organique, puis on élimine le solvant jusqu'à ce qu'une laque produite avec le liant ne contienne que 5 % de solvants organiques, et on neutralise au moins partiellement les groupes carboxyle incorporés par polymérisation.

**Revendication pour l'Etat contractant suivant : ES**

1. Procédé de production d'un liant polybutadiénique séchant à l'air, pouvant être dilué par l'eau, à base d'un produit de greffage, caractérisé en ce qu'on effectue dans un solvant organique une polymérisation par greffage, amorcée par des radicaux, en utilisant

I) 5 à 35 parties en poids de polymère de butadiène

II) 4 à 15 parties en poids d'acides monocarboxyliques à non-saturation $\alpha,\beta$-éthylénique.

III) 25 à 60 parties en poids de monomères durcissants, choisis dans le groupe comprenant le styrène, le méthylstyrène, le vinyltoluène, l'ester méthylique de l'acide méthacrylique, l'ester éthylique de l'acide méthacrylique, l'ester butylique de l'acide méthacrylique et leurs mélanges,

IV) 20 à 45 parties en poids de monomères plastifiants, choisis dans le groupe comprenant l'acrylate d'éthyle, l'acrylate de butyle, l'acrylate de 2-éthylhexyle, l'acrylate d'octyle, l'acrylate de dodécyle, le méthacrylate de 2-éthylhexyle, le méthacrylate d'octyle et leurs mélanges,

V) 0 à 50 parties en poids d'autres composés copolymérisables,

les composants I) à V) devant être choisis de manière que leur somme soit égale à 100, puis on chasse le solvant dans une mesure telle qu'une laque produite avec le liant ne contienne que 5 % de solvants organiques, et on neutralise au moins partiellement les groupes carboxyle incorporés par polymérisation.